# FASCICULE DE BREVET EUROPEEN

(11) **EP 1 319 573 B1**
(45) Date de publication et mention de la délivrance du brevet: **14.06.2006**
(21) Numéro de dépôt: 02293081.2
(22) Date de dépôt: 12.12.2002
(51) Int. Cl.: B62D 1/16, F16B 21/16

(54) **Module pour haut de colonne de direction et ensemble muni de ce module**
Modul für den oberen Lenksäulenteil und Anordnung mit einem solchen Modul
Module for the upper part of a steering column and device with such a module

(30) Priorité: 13.12.2001 FR 0116152
(43) Date de publication de la demande: 18.06.2003
(73) Titulaire: Valeo Switches and Detection Systems - VSDS, 94000 Créteil (FR)
(72) Inventeur: Mange, Jean-Christophe, 94410 Saint Maurice (FR)
(74) Mandataire: de la Bigne, Guillaume Michel Marie

(56) Documents cités:
- EP-A- 0 082 997
- EP-A- 0 873 907

## Description

La présente invention concerne un module pour haut de colonne de direction et un ensemble muni de ce module.

On connaît déjà dans l'état de la technique un module pour haut de colonne de direction de véhicule automobile, du type comprenant :
- un support destiné à être fixé sur un corps de colonne au moyen d'un organe de fixation formant collier de serrage autour du corps de colonne, cet organe de fixation comprenant un secteur rigide de liaison avec le support prolongé angulairement à chacune de ses extrémités par un secteur déformable élastiquement radialement formant branche de serrage,
- des moyens de positionnement axial du support par rapport au corps de colonne destinés à être encliquetés dans des moyens complémentaires de positionnement axial portés par le corps de colonne.

Généralement, le support est destiné à porter divers accessoires comprenant des contacteurs électriques, notamment un contacteur de commande d'essuie-glace et un contacteur de commande d'éclairage, ainsi que les manettes de pilotage de ces contacteurs.

Le module est monté sur le corps de colonne avant le volant de direction.

De façon classique, les moyens de positionnement axial du support par rapport au corps de colonne comprennent au moins une patte axiale d'encliquetage, déformable élastiquement radialement, destinée à coopérer avec une découpe ménagée dans le corps de colonne. Cette patte d'encliquetage, ménagée dans la partie de liaison de l'organe de fixation, permet de pré-positionner axialement le module sur le corps de colonne avant le montage du volant sur cette colonne.

Dans certains types de véhicule, on souhaite permettre au conducteur de régler la position du volant en fonction de sa morphologie. A cet effet, le haut de colonne de direction est équipé de moyens de réglage de sa position.

Par ailleurs, le haut de colonne est habituellement équipé d'éléments d'habillage participant à l'esthétique du poste de conduite. Le support du module de haut de colonne est généralement relié à au moins l'un de ces éléments d'habillage. Dans le cas d'un haut de colonne à position réglable, la position relative des éléments d'habillage s'adapte automatiquement à celle du haut de colonne sous l'effet de moyens de rappel élastique auxquels au moins un élément d'habillage est relié directement ou indirectement.

Or, préalablement au montage du volant sur le haut de colonne, les moyens de rappel élastique des éléments d'habillage sollicitent directement ou indirectement le support du module de haut de colonne dans un sens tendant à déboîter intempestivement de la découpe correspondante la patte de pré-positionnement axial du module.

L'invention a notamment pour but d'éviter un déboîtement intempestif des moyens de pré-positionnement axial du module de haut de colonne, notamment sous l'effet d'une force de rappel élastique transmise au support du module par l'intermédiaire d'un élément d'habillage du haut de colonne relié à ce support.

A cet effet, l'invention a pour objet un module pour haut de colonne de direction de véhicule automobile, du type précité, caractérisé en ce que les moyens de positionnement axial sont portés, au moins en partie, par au moins une branche de serrage.

Suivant d'autres caractéristiques de ce module :
- les moyens de positionnement axial comprennent une saillie, portée par la surface interne d'une branche de serrage, destinée à être encliquetée dans une découpe complémentaire ménagée dans le corps de colonne ;
- la saillie de positionnement axial est délimitée par un épaulement destiné à coopérer avec un bord formant une extrémité axiale de la découpe complémentaire, cet épaulement formant l'extrémité d'une rampe d'escamotage de la saillie de positionnement axial à l'encontre de la force radiale de rappel élastique de la branche de serrage portant cette saillie ;
- le secteur de liaison de l'organe de fixation porte des moyens de positionnement angulaire du support par rapport au corps de colonne destinés à coopérer avec des moyens complémentaires de positionnent angulaire portés par le corps de colonne ;
- les moyens de positionnement angulaire comprennent deux nervures axiales, portées par la surface interne du secteur de liaison, les moyens de positionnement axial du support par rapport au corps de colonne comprenant une patte axiale d'encliquetage, déformable élastiquement radialement, intercalée angulairement entre les deux nervures de positionnement angulaire ;
- les branches de serrage sont destinées à être serrées autour du corps de colonne par des moyens portés par des extrémités libres de ces branches, tels que des moyens de vissage ;
- le support est muni d'au moins un logement destiné à recevoir un contacteur électrique choisi parmi un contacteur de commande d'essuie-glace et un contacteur de commande d'éclairage ;
- les moyens de positionnement axial sont portés, au moins en partie, par les deux branches de serrage.

L'invention a également pour objet un ensemble haut de colonne de direction de véhicule automobile, **caractérisé en ce qu'**il comprend un corps de colonne de direction sur lequel est fixé un module tel défini ci-dessus.

Suivant d'autres caractéristiques de cet ensemble :
- le support est rappelé élastiquement axialement dans un sens de coopération axiale des moyens de positionnement axial portés par la ou les branche(s) de serrage avec les moyens complémentaires de positionnement axial portés par le corps de colonne ;
- une force de rappel élastique axial du support est transmise à ce support par l'intermédiaire d'un élément d'habillage du haut de colonne relié à ce support.

L'invention sera mieux comprise à la lecture de la description qui va suivre, donnée uniquement à titre d'exemple et faite en se référant aux dessins dans lesquels :
- la figure 1 est une vue schématique d'un ensemble haut de colonne de direction de véhicule automobile muni d'un module selon l'invention ;
- la figure 2 est une de face avant du support du module selon l'invention, avec une coupe transversale du haut de colonne de direction ;
- la figure 3 est une vue en coupe suivant la ligne 3-3 de la figure 2 ;
- les figures 4 et 5 sont des vues en perspective, respectivement avant et arrière, du support du module selon l'invention ;
- la figure 6 est une vue en perspective suivant la flèche 6 de la figure 4 de l'organe de fixation formant collier de serrage.

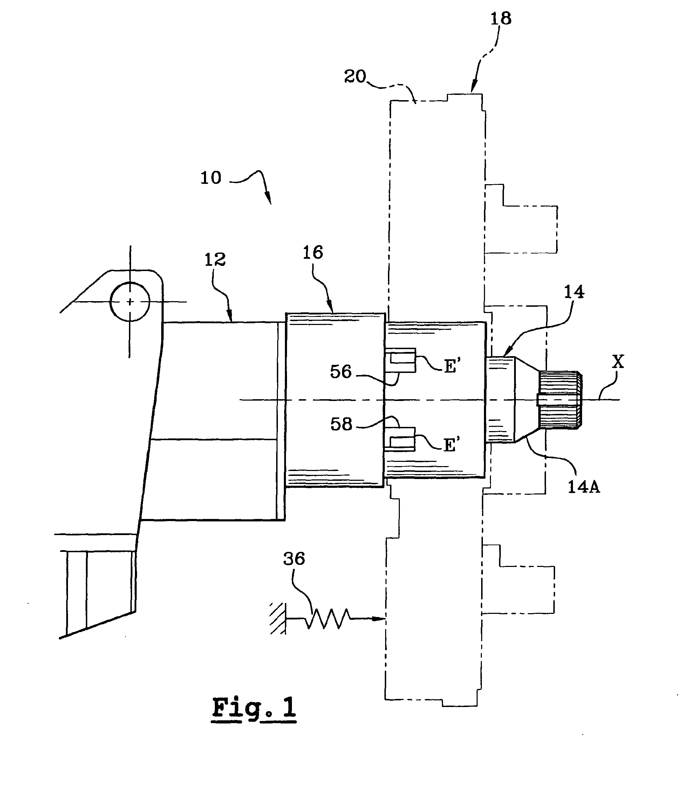

On a représenté sur la figure 1 un ensemble haut de colonne de direction de véhicule automobile, désigné par la référence générale 10.

L'ensemble 10 comprend une colonne de direction 12 comportant un arbre de colonne 14 logé dans un corps de colonne tubulaire 16.

Dans ce qui suit, les orientations avant et arrière seront considérées par rapport aux orientations habituelles d'un conducteur installé dans le véhicule.

Sur la figure 1, on a représenté l'extrémité arrière 14A de l'arbre de colonne destinée à recevoir un volant de direction non représenté.

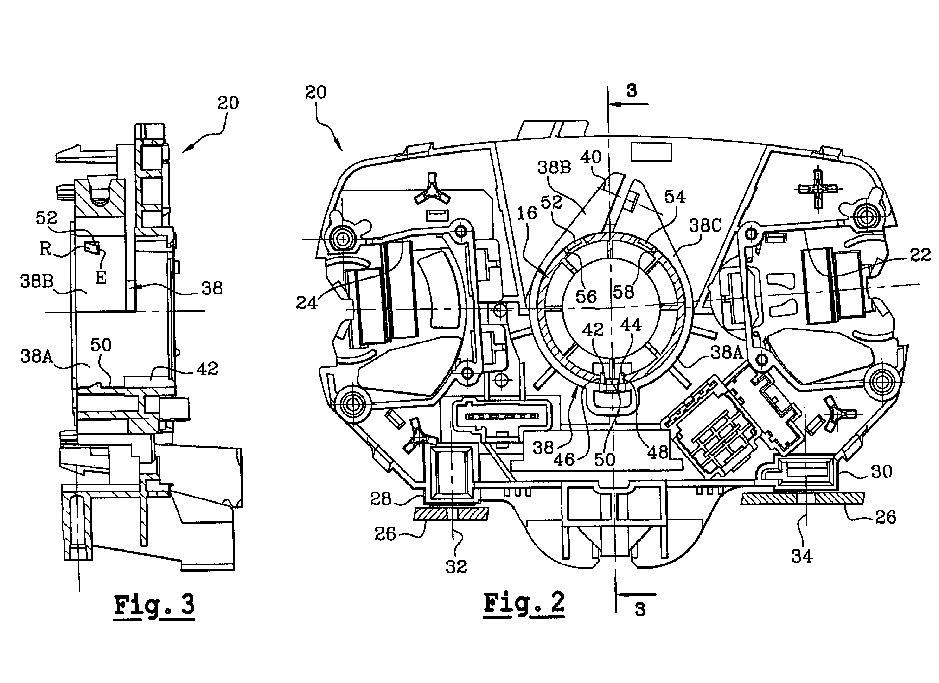

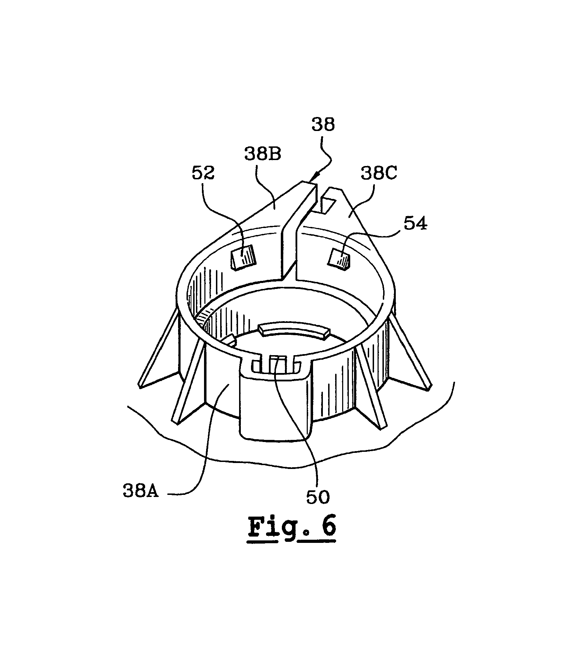

On a également représenté sur la figure 1, en traits mixtes, le contour schématique d'un module 18 pour haut de colonne, selon l'invention. Ce module 18 comprend un support 20 représenté plus en détail sur les figures 2 à 6.

Le support 20, fixé sur le corps de colonne 16, est destiné à porter divers accessoires classiques comprenant des contacteurs électriques. A cet effet, le support est muni de deux logements 22, 24 destinés à recevoir respectivement un contacteur de commande d'essuie-glace et un contacteur de commande d'éclairage. Ces contacteurs électriques sont pilotés par des manettes classiques, non représentées.

En ce qui concerne l'agencement des contacteurs électriques classiques sur le support 20, on pourra se référer utilement au document FR-A-2 782 960 (FR-98 11 009).

Le haut de la colonne de direction 12 est équipée de moyens classiques de réglage de la position de sa partie haute représentée sur la figure 1. Par ailleurs, le haut de la colonne de direction 12 est équipé d'éléments d'habillage classiques participant à l'esthétique du poste de conduite. Le support 20 est relié à au moins un élément d'habillage.

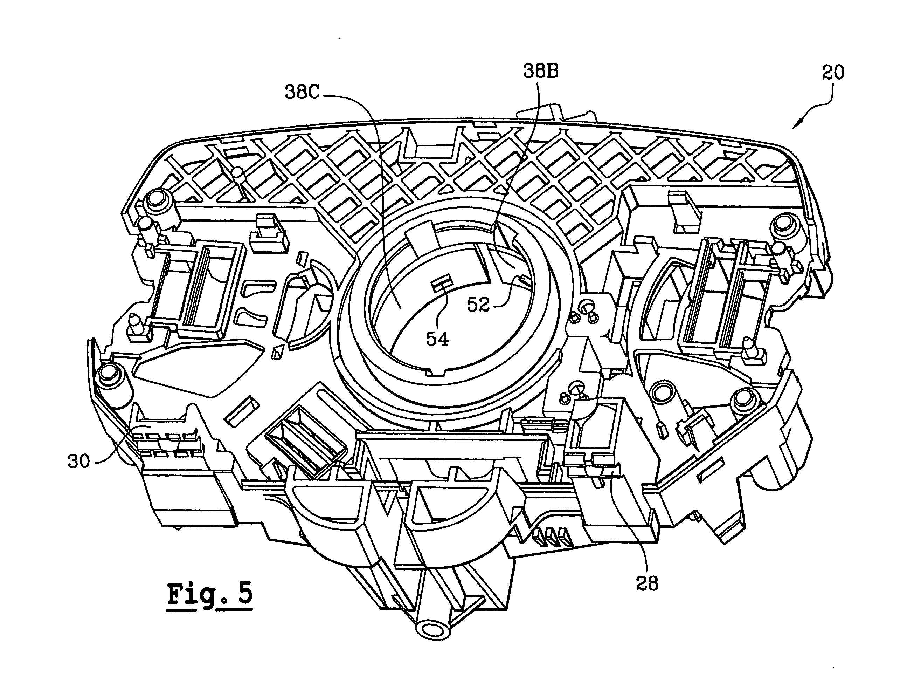

Sur la figure 2, on a représenté partiellement un élément d'habillage 26 fixé sur des pattes 28, 30 solidaires du support 20 à l'aide de moyens classiques, notamment des vis 32, 34 schématisées par des traits mixtes sur la figure 2. Ces pattes de fixation 28, 30 sont représentées en perspective sur la figure 5.

De façon classique, la position relative des éléments d'habillage s'adapte automatiquement à la position du haut de colonne sous l'effet de moyens 36 de rappel élastique, schématisés sur la figure 1, auxquels l'élément d'habillage 26 est relié directement ou indirectement.

Dans ce qui suit, les orientations axiale et radiale seront considérées par rapport à l'axe X de l'extrémité arrière 14A de l'arbre de colonne.

Le support 20, de forme générale prismatique, est fixé sur le corps de colonne 16 au moyen d'un organe de fixation 38 formant collier de serrage autour du corps de colonne 16 et de l'axe X. Cet organe de fixation 38 est porté par une face avant du support 20 qui est la face visible sur la figure 2.

L'organe de fixation 38 comprend un secteur rigide 38A, venu de matière avec le support 20, reliant l'organe de fixation 38 à ce support 20. Le secteur rigide 38 est prolongé angulairement, à chacune de ses extrémités, par un secteur 38B, 38C déformable élastiquement radialement. Ainsi, chaque secteur déformable élastiquement 38B, 38C forme une branche de serrage de l'organe de fixation 38 autour du corps de colonne 16.

Les branches de serrage 38B, 38C sont destinées à être serrées autour du corps de colonne 16 par des moyens classiques portés par des extrémités libres de ces branches, tels que des moyens de vissage comprenant une vis 40 schématisée par un trait mixte sur la figure 2, reliant les deux branches 38B, 38C.

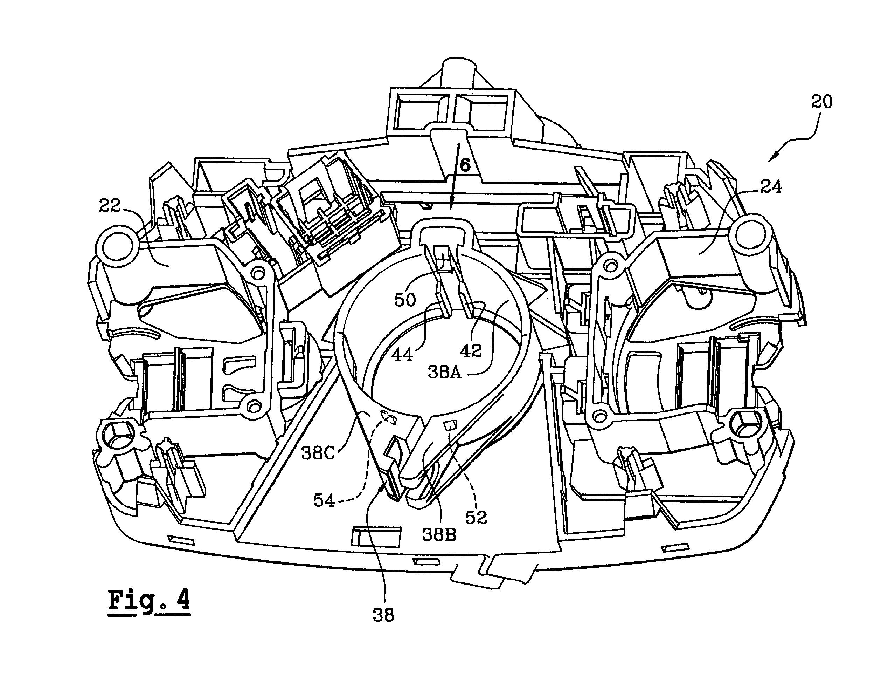

La surface interne de l'organe de liaison 38, plus particulièrement celle du secteur de liaison 38A de l'organe de fixation, est munie de deux nervures axiales 42, 44 (voir figures 2 et 4). Ces nervures 42, 44 sont destinées à coopérer avec des bords axiaux complémentaires 46, 48 d'une découpe ménagée dans le corps de colonne 16 pour positionner angulairement le support 20 par rapport à ce corps de colonne 16.

La surface interne de l'organe de fixation 38 est également munie de moyens de positionnement axial du support 20 par rapport au corps de colonne 16.

Les moyens de positionnement axial comprennent une patte axiale d'encliquetage 50, déformable élastiquement radialement, intercalée angulairement entre les deux nervures 42, 44 de positionnement angulaire. La patte d'encliquetage 50 est destinée à coopérer avec une découpe complémentaire classique ménagée dans le corps de colonne 16.

On notera, notamment en considérant la figure 4, que la patte d'encliquetage 50 est délimitée par deux saignées axiales ménagées dans le secteur de liaison 38A. Ces saignées créent localement une discontinuité angulaire de matière du secteur de liaison 38A.

Les moyens de positionnement axial comprennent également deux saillies 52, 54 portées respectivement par la surface interne des deux branches de serrage 38B, 38C (voir notamment figures 2, 5 et 6). Chaque saillie 52, 54 est destinée à être encliquetée dans une découpe complémentaire correspondante 56, 58 ménagée dans le corps de colonne 16. Les deux saillies 52, 54 sont identiques.

Sur la figure 3, sur laquelle la saillie 52 est représentée en détail, on voit que cette dernière est délimitée par un épaulement E destiné à coopérer avec un bord E' formant une extrémité axiale de la découpe complémentaire correspondante 56 (le bord E' des découpes 56, 58 est représenté notamment sur la figure 1).

L'épaulement E forme l'extrémité d'une rampe R d'escamotage de la saillie 52, 54 à l'encontre de la force radiale de rappel élastique de la branche de serrage 38B, 38C portant cette saillie.

On notera donc que les moyens de positionnement axial du support 20 par rapport au corps de colonne 16 sont portés, au moins en partie, par les branches de serrage 38B, 38C.

En variante, la patte d'encliquetage 50 pourrait être supprimée et/ou seulement une branche de serrage 38B, 38C pourrait être munie d'une saillie d'encliquetage 52, 54.

On précisera ci-dessous les principaux aspects liés à l'invention du montage du module 10 sur le corps de colonne 16.

Pour fixer le support 20 sur le corps de colonne 16, on emboîte l'organe de fixation 38 sur l'extrémité arrière de ce corps de colonne 16. De façon classique, la patte d'encliquetage 50 s'escamote par coopération avec le contour du corps de colonne 16, jusqu'à atteindre sa position d'encliquetage dans laquelle elle s'emboîte dans une découpe correspondante de ce corps 16. De même, les saillies 52, 54 s'escamotent par coopération de leur rampe R avec le contour du corps de colonne 16 en mettant à profit l'élasticité des branches de serrage 38B, 38C (qui se déforment radialement), jusqu'à atteindre les découpes correspondantes 56, 58 dans lesquelles elles s'emboîtent.

Une fois les moyens de positionnement axial portés par l'organe de fixation 38 emboîtés dans les découpes complémentaires ménagées dans le corps de colonne 16, le support 20, fixé à l'élément d'habillage 26, est rappelé élastiquement axialement dans un sens de coopération axiale des épaulements E des saillies 52, 54 avec les bords E' des découpes 56, 58. En effet, l'élément d'habillage 26 transmet une force de rappel élastique axial au support 20.

Le support 20 est définitivement fixé sur le corps de colonne 16 par serrage des branches 38B, 38C au moyen de la vis 40.

On notera que, après serrage de la vis 40, les saillies 52, 54 sont définitivement emboîtées radialement dans les découpes correspondantes 56, 58 sans risque de déboîtement intempestif (les branches de serrage 38B, 38C ne peuvent plus se déformer radialement). Le positionnement axial du support 20 par rapport au corps de colonne 16 est donc sûr et définitif, ceci avant même le montage du volant sur l'arbre 14.

En l'absence de saillies 52, 54 sur les branches de serrage 38B, 38C, la patte d'encliquetage 50 aurait pu se déboîter intempestivement du fait qu'elle n'est pas immobilisée radialement par le serrage de la vis 40.

Parmi les avantages de l'invention, on notera que celle-ci permet d'éviter un déboîtement intempestif des moyens de prépositionnement axial du module 10, notamment sous l'effet de la force de rappel élastique transmise au support 20 par l'intermédiaire de l'élément d'habillage 26 relié à ce support 20.

Par ailleurs, on notera que les saillies 52, 54 constituent des moyens de positionnement axial du support 20 par rapport au corps de colonne 16 qui ne créent pas d'interruption angulaire de matière dans l'organe de fixation 38 et de ce fait, ne le fragilisent pas.

Enfin, les saillies 52, 54 peuvent être aisément formées sur les branches de serrage 38B, 38C par moulage, l'organe de fixation 38 étant facilement démoulable par déformation élastique des branches 38B, 38C.

## Revendications

1. Module pour haut de colonne de direction de véhicule automobile, du type comprenant :
- un support (20) destiné à être fixé sur un corps (16) de colonne au moyen d'un organe de fixation (38) formant collier de serrage autour du corps (16) de colonne, cet organe de fixation (38) comprenant un secteur rigide (38A) de liaison avec le support (20) prolongé angulairement à chacune de ses extrémités par un secteur déformable élastiquement radialement formant branche de serrage (38B, 38C),
- des moyens (50 à 54) de positionnement axial du support (20) par rapport au corps (16) de colonne destinés à être encliquetés dans des moyens complémentaires (56, 58) de positionnement axial portés par le corps (16) de colonne,
**caractérisé en ce que** les moyens de positionnement axial (52, 54) sont portés, au moins en partie, par au moins une branche de serrage (38B, 38C).

2. Module selon la revendication 1, **caractérisé en ce que** les moyens de positionnement axial comprennent une saillie (52, 54), portée par la surface interne d'une branche de serrage (38B, 38C), destinée à être encliquetée dans une découpe complémentaire (56, 58) ménagée dans le corps (16) de colonne.

3. Module selon la revendication 2, **caractérisé en ce que** la saillie (52, 54) de positionnement axial est délimitée par un épaulement (E) destiné à coopérer avec un bord (E') formant une extrémité axiale de la découpe complémentaire (56,58), cet épaulement (E) formant l'extrémité d'une rampe (R) d'escamotage de la saillie (52, 54) de positionnement axial à l'encontre de la force radiale de rappel élastique de la branche de serrage (38B, 38C) portant cette saillie (52, 54).

4. Module selon l'une quelconque des revendications 1 à 3, **caractérisé en ce que** le secteur de liaison (38A) de l'organe de fixation porte des moyens (42, 44) de positionnement angulaire du support (20) par rapport au corps (16) de colonne destinés à coopérer avec des moyens complémentaires (46, 48) de positionnent angulaire portés par le corps (16) de colonne.

5. Module selon la revendication 4, **caractérisé en ce que** les moyens de positionnement angulaire comprennent deux nervures axiales (42, 44), portées par la surface interne du secteur de liaison (38A), les moyens de positionnement axial du support (20) par rapport au corps (16) de colonne comprenant une patte axiale d'encliquetage (50), déformable élastiquement radialement, intercalée angulairement entre les deux nervures (42, 44) de positionnement angulaire.

6. Module selon l'une quelconque des revendications 1 à 5, **caractérisé en ce que** les branches de serrage (38B, 38C) sont destinées à être serrées autour du corps (16) de colonne par des moyens (40) portés par des extrémités libres de ces branches, tels que des moyens de vissage.

7. Module selon l'une quelconque des revendications 1 à 6, **caractérisé en ce que** le support (20) est muni d'au moins un logement (22, 24) destiné à recevoir un contacteur électrique choisi parmi un contacteur de commande d'essuie-glace et un contacteur de commande d'éclairage.

8. Module selon l'une quelconque des revendications 1 à 7, **caractérisé en ce que** les moyens de positionnement axial (52, 54) sont portés, au moins en partie, par les deux branches de serrage.

9. Ensemble haut de colonne de direction de véhicule automobile, **caractérisé en ce qu'**il comprend un corps (16) de colonne de direction sur lequel est fixé un module (10) selon l'une quelconque des revendications précédentes.

10. Ensemble selon la revendication 9, **caractérisé en ce que** le support (20) est rappelé élastiquement axialement dans un sens de coopération axiale des moyens de positionnement axial (52, 54) portés par la ou les branche(s) de serrage avec les moyens complémentaires de positionnement axial (56, 58) portés par le corps (16) de colonne.

11. Ensemble selon la revendication 10, **caractérisé en ce qu'**une force de rappel élastique axial du support (20) est transmise à ce support (20) par l'intermédiaire d'un élément (26) d'habillage du haut de colonne relié à ce support (20).

## Claims

1. A module for the upper part of a motor vehicle steering column, the module being of the type comprising:
· a support (20) for being secured to a column body (16) by means of a fastener member (38) forming a clamping collar around the column body (16), this fastener member (38) comprising a rigid connection sector (38A) for connection with the support (20) that is angularly extended at each of its ends by a sector that is deformable elastically radially, forming a clamping branch (38B, 38C); and
· axial positioning means (50 to 54) for axially positioning the support (20) relative to the column body (16) and designed to be snap-fastened in complementary axial positioning means (56, 58) carried by the column body (16);
the module being **characterized in that** the axial positioning means (52, 54) are carried at least in part by at least one clamping branch (38B, 38C).

2. A module according to claim 1, **characterized in that** the axial positioning means comprise a projection (52, 54) carried by the inside surface of a clamping branch (38B, 38C) for being-fastened in a complementary cut-out (56, 58) formed in the column body (16).

3. A module according to claim 2, **characterized in that** the axial positioning projection (52, 54) is defined by a shoulder (E) for cooperating with an edge (E') forming an axial end of the complementary cut-out (56, 58), this shoulder (E) forming the end of a ramp (R) for causing the axial positioning projection (52, 54) to be retracted against the radial resilient return force of the clamping branch (38B, 38C) carrying the projection (52, 54).

4. A module according to any one of claims 1 to 3, **characterized in that** the connection sector (38A) of the fastener member carries angular positioning means (42, 44) for angularly positioning the support (20) relative to the column body (16) and designed to cooperate with complementary angular positioning means (46, 48) carried by the column body (16).

5. A module according to claim 4, **characterized in that** the angular positioning means comprise two axial ribs (42, 44) carried by the inside surface of the connection sector (38A), the axial positioning means for axially positioning the support (20) relative to the column body (16) comprising a snap-fastening axial tab (50) that is deformable elastically radially and that is interposed angularly between the two angular positioning ribs (42, 44).

6. A module according to any one of claims 1 to 5, **characterized in that** the clamping branches (38B, 38C) are designed to be clamped around the column body (16) by means (40) carried by the free ends of said branches, such as screw fastener means.

7. A module according to any one of claims 1 to 6, **characterized in that** the support (20) is provided with at least one housing (22, 24) designed to receive an electrical switch selected from a windscreen wiper control switch and a headlight control switch.

8. A module according to any one of claims 1 to 7, **characterized in that** the axial positioning means (52, 54) are carried at least in part by the two clamping branches.

9. A assembly for the upper part of a motor vehicle steering column, the assembly being **characterized** and it comprises a steering column body (16) having a module (10) according to any preceding claim mounted thereon.

10. An assembly according to claim 9, **characterized in that** the support (20) is urged resiliently axially in a direction for axial cooperation between the axial positioning means (52, 54) carried by the clamping branch(s) and the complementary axial positioning means (56, 58) carried by the column body (16).

11. An assembly according to claim 10, **characterized in that** an axial resilient return force for the support (20) is transmitted to the support (20) via an element (26) covering the top of the column and connected to the support (20).

## Patentansprüche

1. Modul für den oberen Lenksäulenteil eines Kraftfahrzeugs, umfassend:
- einen Träger (20), der dazu bestimmt ist, an einem Säulenkörper (16) mithilfe eines Befestigungselements (38), welches eine Spannschelle um den Säulenkörper (16) bildet, befestigt zu werden, wobei dieses Befestigungselement (38) einen starren Bereich (38A) zur Verbindung mit dem Träger (20), der an jedem seiner Enden winklig durch einen radial elastisch verformbaren Bereich, der einen Spannarm (38B, 38C) bildet, verlängert wird, umfasst,
- Mittel (50 bis 54) zur axialen Positionierung des Trägers (20) bezogen auf den Säulenkörper (16), die dazu bestimmt sind, in komplementäre Mittel (56, 58) zur axialen Positionierung, die durch den Säulenkörper (16) getragen werden, einzurasten,
**dadurch gekennzeichnet, dass** die Mittel zur axialen Positionierung (52, 54) zumindest teilweise durch mindestens einen Spannarm (38B, 38C) getragen werden.

2. Modul nach Anspruch 1, **dadurch gekennzeichnet, dass** die Mittel zur axialen Positionierung einen durch die Innenfläche eines Spannarms (38B, 38C) getragenen Vorsprung (52, 54) aufweisen, der dazu bestimmt ist, in einen in den Säulenkörper (16) eingelassenen komplementären Ausschnitt (56, 58) einzurasten.

3. Modul nach Anspruch 2, **dadurch gekennzeichnet, dass** der Vorsprung (52, 54) zur axialen Positionierung durch einen Ansatz (E) begrenzt wird, der dazu bestimmt ist, mit einem Rand (E'), der ein axiales Endes des komplementären Ausschnitts (56, 58) bildet, zusammenzuwirken, wobei dieser Ansatz (E) das Ende einer Rampe (R) zum Versenken des Vorsprungs (52, 54) zur axialen Positionierung entgegen der radialen elastischen Rückzugskraft des Spannarms (38B, 38C), welcher diesen Vorsprung (52, 54) trägt, bildet.

4. Modul nach einem der Ansprüche 1 bis 3, **dadurch gekennzeichnet, dass** der Bereich (38A) zum Verbinden des Befestigungselements Mittel (42, 44) zum winkligen Positionieren des Trägers (20) bezogen auf den Säulenkörper (16) trägt, die dazu bestimmt sind, mit komplementären Mitteln (46, 48) zum winkligen Positionieren, die durch den Säulenkörper (16) getragen werden, zusammenzuwirken.

5. Modul nach Anspruch 4, **dadurch gekennzeichnet, dass** die Mittel zum winkligen Positionieren zwei axiale Rippen (42, 44), die von der Innenfläche des Verbindungsbereichs (38A) getragen werden, aufweisen, wobei die Mittel zur axialen Positionierung des Trägers (20) bezogen auf den Säulenkörper (16) einen axialen Einrasthaken (50) aufweisen, der radial elastisch verformbar ist und winklig zwischen den beiden Rippen (42, 44) zum winkligen Positionieren eingesetzt ist.

6. Modul nach einem der Ansprüche 1 bis 5, **dadurch gekennzeichnet, dass** die Spannarme (38B, 38C) dazu bestimmt sind, durch Mittel (40), die durch freie Enden dieser Arme getragen werden, wie etwa Schraubmittel, um den Säulenkörper (16) gespannt zu werden.

7. Modul nach einem der Ansprüche 1 bis 6, **dadurch gekennzeichnet, dass** der Träger (20) mit mindestens einer Aufnahme (22, 24) versehen ist, die dazu bestimmt ist, einen elektrischen Schalter, ausgewählt zwischen einem Scheibenwischer-Steuerschalter und einem Beleuchtungs-Steuerschalter, aufzunehmen.

8. Modul nach einem der Ansprüche 1 bis 7, **dadurch gekennzeichnet, dass** die Mittel zur axialen Positionierung (52, 54) zumindest teilweise durch die beiden Spannarme getragen werden.

9. Oberer Lenksäulenteil eines Kraftfahrzeugs, **dadurch gekennzeichnet, dass** er einen Lenksäulenkörper (16), an dem ein Modul (10) nach einem der vorhergehenden Ansprüche befestigt ist, umfasst.

10. Konstruktion nach Anspruch 9, **dadurch gekennzeichnet, dass** der Träger (20) axial elastisch in einer Richtung des axialen Zusammenwirkens der Mittel zur axialen Positionierung (52, 54), die durch den oder die Spannarme getragen werden, mit den komplementären Mitteln zur axialen Positionierung (56, 58), die durch den Säulenkörper (16) getragen werden, zurückgezogen wird.

11. Konstruktion nach Anspruch 10, **dadurch gekennzeichnet, dass** eine axiale elastische Rückzugskraft des Trägers (20) auf diesen Träger (20) über ein Verkleidungselement (26) des oberen Säulenteils, das mit diesem Träger (20) verbunden ist, übertragen wird.
